# EUROPÄISCHE PATENTSCHRIFT

(11) **EP 1 808 636 B1**
(45) Veröffentlichungstag und Bekanntmachung des Hinweises auf die Patenterteilung: **07.10.2009**
(21) Anmeldenummer: 06026573.3
(22) Anmeldetag: 21.12.2006
(51) Int. Cl.: F16M 11/14

(54) **Stativkopf**
Tripod head
Tête de trépied

(30) Priorität: 12.01.2006 DE 102006001580
(43) Veröffentlichungstag der Anmeldung: 18.07.2007
(73) Patentinhaber: FLM GmbH Foto-, Licht- und Messtechnisches Zubehör, 79312 Emmendingen (DE)
(72) Erfinder: Bürklin, Werner, 79312 Emmendingen (DE)
(74) Vertreter: Maucher, Wolfgang

(56) Entgegenhaltungen:
- DE-A1- 3 105 989
- DE-A1- 4 024 585
- DE-C1- 19 839 461
- GB-A- 884 422
- US-A- 6 119 995

## Beschreibung

Die Erfindung bezieht sich auf einen Stativkopf mit einem Kugelgelenk, das eine in einem Lagergehäuse verschwenkbar gelagerte Gelenkkugel aufweist, wobei das Kugelgelenk zwischen an einander abgewandten Enden des Stativkopfs befindlichen Anschlussstellen angeordnet ist, von denen die eine mit einer Kamera, einem Fernglas, einem Spektiv oder dergleichen optischem Gerät und die andere mit wenigstens einem Stativbein oder dergleichen Halterung verbunden oder verbindbar ist.

Für Foto- oder Filmaufnahmen mit einer Kamera wie auch für Naturbeobachtungen mit Ferngläsern oder Spektiven werden häufig hochwertige optische Geräte mit einem hohen Eigengewicht verwendet, so dass für einen länger andauernden Beobachtungsvorgang die Verwendung eines Stativs erforderlich ist. Auch durch die beispielsweise bei der Vogelbeobachtung erforderlichen hohen Brennweiten ist die Verwendung eines Stativs sinnvoll. Solche Stative müssen dem Anwender jedoch weiterhin die Möglichkeit bieten, das jeweilige optische Gerät durch Schwenkbewegungen in horizontaler und in vertikaler Richtung einem Objekt, beispielsweise einem fliegenden Vogel, nachzuführen. Zur Beobachtung und gegebenenfalls Aufnahme von ruhenden Objekten sollte es möglich sein, das Stativ in der jeweiligen Schwenkposition gegen ein Verwackeln und gegen unerwünschte Verstellbewegungen zu sichern.

Vorbekannte Stative DE 19 839 461 weisen einen Stativkopf auf, bei dem ein Kugelgelenk in einer horizontalen Ebene gedreht werden kann und das vertikale Schwenkbewegungen erlaubt. Zum Festlegen des Kugelgelenks in einer gewünschten Position wird auf die in einer Gelenkkapsel befindliche Gelenkkugel eine entsprechende Feststellkraft ausgeübt. Greift diese Feststellkraft jedoch außerhalb der Kugelmitte an der Gelenkkugel an, kann diese in der Gelenkkapsel leicht angehoben oder abgesenkt werden. Darüber hinaus besteht die Gefahr, dass eine auf die Gelenkkugel ausgeübte Feststellkraft auch die Gelenkkapsel vorübergehend weiten kann. Die dadurch ausgeübten Toleranzen können sich bei einem in Verbindung mit einem Fernglas oder dergleichen optischem Gerät verwendeten Stativ dahingehend nachteilig auswirken, dass das ursprünglich anvisierte Ziel beim Feststellen des Kugelgelenks unbeabsichtigt aus dem Blickfeld des optischen Geräts verschwindet. Insbesondere bei optischen Geräten mit hohen Brennweiten, wie sie beispielsweise in der Tierbeobachtung Verwendung finden, bewirken Änderungen von wenigen Millimetern in der Ausrichtung des Gerätes eine Verschiebung dessen Blickfeldes von mehreren Metern.

Es besteht daher die Aufgabe, einen Stativkopf der eingangs genannten Art zu schaffen, dessen Kugelgelenk auf einfach Art gegen eine ungewünschte Schwenkbewegung gesichert werden kann, ohne dass das ursprünglich anvisierte Ziel aus dem Blickfeld des mit dem Stativkopf verbundenen optischen Gerätes gelangt. Zudem soll der Stativkopf einfach und kostengünstig herstellbar sein.

Die erfindungsgemäße Lösung dieser Aufgabe besteht darin, dass die Gelenkkugel drehfest mit einem aus dem Lagergehäuse nach außen führenden Stellarm verbunden ist, der zumindest bereichsweise in einem mit dem Lagergehäuse verbundenem Gehäusefortsatz drehbar gelagert ist und welcher Stellarm eine winklig vorstehende Gewindehülse für eine drehbar und axial verstellbar in der Gewindehülse gehaltene, ein Gegengewinde aufweisende Handhabe aufweist, und dass ein zwischen dem Stellarm und dem Gehäusefortsatz umlaufend gelagerter, mit dem in die Gewindehülse ragenden Endbereich der Handhabe beaufschlagbarer und dadurch spreizbarer und reibschlüssig an die Innenwandung des Gehäusefortsatzes anlegbarer Feststellring vorgesehen ist, der bezüglich der Drehachse des Stellarms drehfest mit der Gewindehülse verbunden ist.
Die Feststellkraft zum Verhindern einer Schwenk- oder Neigebewegung des Kugelgelenks wirkt dabei nicht auf die Gelenkkugel selbst, sondern auf den an der Gelenkkugel vorstehenden Stellarm. Dadurch ist eine Positionsverschiebung der Gelenkkugel oder eine Verformung des Lagers der Gelenkkugel vermieden. Die Lagegenauigkeit der Gelenkkugel wird auch dadurch sichergestellt, dass sich beim Spreizen des Feststellrings die Klemmkräfte gleichmäßig über den gesamten Umfang des Feststellrings verteilen und so keine einseitige Krafteinwirkung auftritt.
Die Spreizung des Feststellrings wird erreicht durch eine Drehbewegung an der Handhabe, die mittels der Gewindehülse und dem Gegengewinde der Handhabe in eine axiale Bewegung der Handhabe umgewandelt wird, und die sich dadurch ergebende Beaufschlagung des Feststellrings durch die Handhabe, wobei sich der Feststellring reibschlüssig an die Innenwandung des Gehäusefortsatzes anlegt. Da die Gewindehülse mit dem Stellarm und dieser wiederum mit der Gelenkkugel verbunden ist, und da der Feststellring drehfest mit der Gewindehülse verbunden ist, ist bei klemmendem Feststellring die Gelenkkugel blockiert und mit der in der Gewindehülse geführten Handhabe kann keine weitere Schwenkbewegung durchgeführt werden. Da sowohl das Einstellen der Schwenkposition wie auch das Feststellen der Gelenkkugel durch eine Schwenk- beziehungsweise eine Drehbewegung an der Handhabe durchgeführt wird, ist die Betätigung des erfindungsgemäßen Stativkopfs mit der geforderten Präzision besonders einfach und ergonomisch möglich. Durch den einfachen mechanischen Aufbau ist der Stativkopf zudem einfach und kostengünstig herstellbar.

Um den Feststellring besonders einfach aufspreizen zu können, ist es vorteilhaft, wenn der Feststellring im Beaufschlagungsbereich für die Handhabe offen ausgebildet ist, und wenn die einander zugewandten Ringinnenseiten im Öffnungsbereich schräg angeordnet sind und eine konische, sich zum radialen Außenbereich verjüngende Aufnahmeöffnung für das Beaufschlagungsende der Handhabe bilden. Das Beaufschlagungsende der Handhabe drückt dabei die einander zugewandten Ringinnenseiten im Öffnungsbereich des Feststellrings auseinander, wodurch der Feststellring ohne großen Kraftaufwand aufgespreizt und gegen die Innenwandung des Gehäusefortsatzes gedrückt wird. Dadurch ist ein einfaches Betätigen der Handhabe zum Festlegen der Gelenkkugel mit geringem Kraftaufwand möglich.

Für ein gutes Gleiten des Beaufschlagungsendes der Handhabe an den einander zugewandten Ringinnenseiten im Öffnungsbereich des Feststellrings sowohl bei der Dreh- wie auch bei der Axial-Bewegung der Handhabe und somit für ein einfaches und präzises Feststellen und Freigeben der Gelenkkugel ist es zweckmäßig, wenn das Beaufschlagungsende der Handhabe kugelförmig oder kugelabschnittsförmig ausgebildet ist und/oder eine gewölbte Seitenfläche aufweist.

Das Aufspreizen des Feststellrings kann zudem vereinfacht werden, wenn der Feststellring im dem Öffnungsbereich gegenüberliegenden Bereich eine Materialschwächung aufweist. Diese Materialschwächung wirkt praktisch als Gelenk, so dass der Feststellring in diesem Bereich einfach und mit geringem Kraftaufwand verformt werden kann, im übrigen Bereich trotzdem eine hohe Stabilität und Festigkeit aufweist, um im gespreizten Zustand eine gute kraft- und reibschlüssige Verbindung mit der Innenseite des Gehäusefortsatz zu bilden.

Um auf einfache Art die drehfeste Verbindung zwischen Gewindehülse und Feststellring herzustellen, ist es vorteilhaft, wenn der Feststellring im Bereich der Materialschwächung eine kreisabschnittsförmige Ausnehmung für die winklig vorstehende Gewindehülse aufweist, die von der Gewindehülse formschlüssig durchsetzt ist. Je nach Winkelstellung der Gewindehülse und somit der Handhabe kann die Ausnehmung beispielsweise halbkreisförmig sein. Bei einer Schwenkbewegung an der Handhabe wird somit automatisch der Feststellring mitbewegt beziehungsweise im Gegenzug, bei gespreiztem und reibschlüssig an dem Gehäusefortsatz anliegendem Feststellring, eine Schwenkbewegung der Handhabe verhindert.

Um wahlweise schnelle Schwenks oder weiche, langsame und gleichmäßige Schwenkbewegungen durchführen zu können, ist es vorteilhaft, wenn die Gelenkkugel zwischen zwei Gleitlagern in dem Lagergehäuse gelagert ist, wobei eines der Gleitlager in Beabstandungsrichtung der Gleitlager axial verschiebbar in dem Lagergehäuse gelagert ist und eine Auflaufschräge für ein das Lagergehäuse durchsetzendes, quer zur Verschieberichtung des Gleitlagers axial verstellbares Beaufschlagungselement aufweist. Durch Veränderung des Abstandes der beiden Gleitlager zueinander wird die von den Gleitlagern auf die Gelenkkugel ausgeübte Kraft und somit die zum Verschwenken der Gelenkkugel erforderliche Kraft verändert. Bei größerem Abstand kann sich die Gelenkkugel freier bewegen, so dass ein gegebenenfalls freies Drehen der Gelenkkugel ohne wesentliche bremsende Reibkräfte möglich ist. Bei reduziertem Abstand erhöhen sich die Reibkräfte zwischen Gleitlagern und Gelenkkugel, so dass zum Verschwenken mehr Kraft aufgewendet werden muss, wodurch gleichmäßigere und ruhigere Schwenkbewegungen möglich sind und insbesondere auch ein selbsttätiges Verschwenken des Stativkopfs selbst bei gelöstem Feststellring verhindert werden kann. Durch die indirekte Verstellung des Gleitlagers mittels des Beaufschlagungselements über die Auflaufschräge ist zudem eine besonders feine und stufenlose Justage der Gleitkraft möglich.

Dabei ist es zweckmäßig, wenn das Beaufschlagungselement als Stellschraube ausgebildet ist und in einer Gewindeführung des Lagergehäuses drehbar gelagert ist. Die Gleitkraft kann so besonders einfach und präzise mittels einer Drehbewegung, die durch die Gewindeführung in die Axialbewegung des Beaufschlagungselementes umgesetzt wird, eingestellt werden.

Die Bedienung des Stativkopfs ist besonders einfach möglich, wenn das Beaufschlagungselement an dem dem Stellarm um etwa 180° gegenüberliegenden Bereich des Lagergehäuses angeordnet ist. Mit einer Hand kann die Handhabe gehalten und der Schwenkwinkel eingestellt werden, und gleichzeitig kann bei Bedarf mit der anderen Hand die Reibkraft für die Gelenkkugel zwischen ihren Gleitlagern nachgeführt werden, ohne zunächst die Gelenkkugel mittels Handhabe und Feststellring festzulegen, um die Handhabe loslassen zu können.

Durch den seitlich aus dem Lagergehäuse geführten Stellarm ist die Gelenkkugel selbst nur in einer vertikalen Schwenkebene verschwenkbar.

Eine bevorzugte Ausführungsform sieht daher vor, dass der Stativkopf zwischen der Gelenkkugel und der halterungsseitigen Anschlussstelle ein Drehlager für eine Drehbewegung in einer horizontalen Ebene aufweist, und dass das Drehlager durch das Lagergehäuse einerseits und ein daran drehbar gelagertes Gehäuse-Bodenteil andererseits gebildet ist.

Dabei ist es zweckmäßig, wenn zum Variieren der zum Verstellen des Drehlagers erforderlichen Kraft ein Reiblager für ein das Lagergehäuse radial durchsetzendes, axial verstellbares Beaufschlagungselement vorgesehen ist, welches Reiblager ein unteres Lagerteil und ein vertikal dazu, gegen eine Rückstellkraft verstellbares oberes Lagerteil aufweist, wobei das obere Lagerteil eine umlaufende Auflaufschräge für das Beaufschlagungselement aufweist.

Dadurch ist einerseits eine horizontale Schwenkbewegung möglich, andererseits auch indirekt eine variable Gleitkraft für dieses horizontale Drehlager mit Hilfe des Reiblagers einstellbar, um wahlweise schnelle Schwenkbewegungen, beispielsweise zum Anvisieren eines neuen Objekts, oder präzise, weiche Schwenks, beispielsweise beim Verfolgen eines bewegten Objekts, durchführen zu können.

Auch bei diesem Beaufschlagungselement ist es zweckmäßig, analog dem Beaufschlagungselement für das Gleitlager der Gelenkkugel, wenn das Beaufschlagungselement als Stellschraube ausgebildet ist und in einer Gewindeführung des Lagergehäuses drehbar gelagert ist.

Ebenso ist es für beide Beaufschlagungselemente zweckmäßig, wenn diese jeweils an ihrem Beaufschlagungsende konisch ausgebildet sind und eine mit der jeweiligen Auflaufschräge des Gleitlagers oder des Lagerteils zusammenwirkende Auflaufschräge aufweisen. Dadurch können die aneinander liegenden Auflaufschrägen beim Betätigen des Beaufschlagungselements jeweils gut übereinander gleiten und es ist eine feine und stufenlose Einstellung des jeweiligen Gleitwiderstandes möglich.

Um ein Verdrehen des horizontalen Drehlagers beim Montieren des Stativkopfs auf ein Stativ zu verhindern und so das Aufschrauben des Stativkopfs auf das Stativ zu vereinfachen, kann ein axial verstellbares, das Lagergehäuse im Bereich des Drehlagers durchsetzendes Rastelement vorgesehen sein, das zwischen einer in eine Rastausnehmung des unteren Lagerteils eingreifenden Rastposition und einer demgegenüber zurückgezogenen Freigabeposition verstellbar ist. In Rastposition ist dabei das horizontale Drehlager blockiert und ein Drehen des Stativkopfs, auch wenn dies an seinem oberen Ende gegriffen wird, bewirkt, dass sich die untere Anschlussstelle für das Stativ mitdreht und ein dortiges Innengewinde kann mit einem entsprechenden Gewindedorn des Stativs verbunden werden. Bei gelöstem Rastelement in dessen Freigabeposition kann das horizontale Drehlager in gewünschter Weise verschwenkt werden.

Dabei ist es zweckmäßig, wenn das Rastelement druckknopfartig ausgebildet ist und gegen die Rückstellkraft einer Rückstellfeder, die in einem am Lagergehäuse gehaltenen Gehäuseabschnitt angeordnet ist, in die Rastposition verstellbar ist. In Ruhelage ist das Rastelement somit in seiner Freigabeposition und das Drehlager ist zum Schwenken freigegeben, was der am häufigst benötigte Zustand ist. Lediglich für das nur selten benötigte Auf- und Abschrauben des Stativkopfs auf ein Stativ kann das Rastelement eingedrückt werden, um das Drehlager zu blockieren. Sobald das Rastelement losgelassen wird, springt dies aufgrund der Rückstellkraft der Rückstellfeder in die Freigabeposition zurück. Es sind somit auch keine verlierbaren Feststellelemente vorhanden, so dass das Festlegen des Drehgelenks jederzeit und ohne Werkzeug schnell und einfach möglich ist.

Um das Einstellen der Gleitkräfte des Kugellagers und des horizontalen Drehlagers auf besonders ergonomische Art durchführen zu können und somit auch eine besonders präzise Einstellung zu ermöglichen ist es vorteilhaft, wenn die als Stellschrauben ausgebildeten Beaufschlagungselemente an ihren außen liegenden Betätigungsenden jeweils einen Drehknopf aufweisen. Dieser kann insbesondere eine Profilierung für eine bessere Griffigkeit aufweisen.

Ein weiterführender Erfindungsgedanke sieht vor, dass im dem unteren Lagerteil zugewandten Endbereich des Rastelementes ein gegen eine Rückstellkraft einer Rückstellfeder verstellbares Rastmittel zum wechselweise Eingreifen in umfangsseitig an dem unteren Lagerteil angeordnete Rastausnehmungen vorgesehen ist. Die Rastausnehmungen können in gleichmäßigen Abständen von beispielsweise 5° oder 10° zueinander entlang des Außenumfangs des unteren Lagerteils angeordnet sein. Beim Drehen des Drehlagers rastet das Rastmittel dann jeweils in einer der Rastausnehmungen ein, so dass ein Drehen des Drehlagers um einen präzise gewünschten Drehwinkel möglich ist und das Drehlager durch das Rastmittel zudem in dieser Position leicht arretiert und gegen unbeabsichtigtes Verstellen gesichert ist. Eine solche präzise Einstellung von Schwenkwinkeln ist beispielsweise in der Panoramafotografie erforderlich, um exakt definierte Blickwinkel-Abschnitte aufnehmen zu können.

Dabei ist es zweckmäßig, wenn ein axial verstellbar an dem Gehäuseabschnitt gelagertes Halteteil für das Rastelement mit dem Rastmittel vorgesehen ist, das zwischen einer Rastposition mit in eine der Rastausnehmungen eingreifendem Rastmittel und einer demgegenüber zurückgezogenen Freilaufposition verstellbar ist. Dadurch kann einerseits die Rastfunktion, beispielsweise für Panoramafotografie, genutzt werden. Andererseits ist in der Freilaufposition ein freies Drehen des Drehlagers möglich, um weiche, fließende Schwenkbewegungen durchführen zu können, beispielsweise zur Beobachtung sich bewegender Objekte.

Zum einfachen Verstellen des Halteteils zwischen der Rastposition und der Freilaufposition ist es vorteilhaft, wenn das Halteteil für das Rastelement mit dem Rastmittel als Drehknopf ausgebildet ist und ein Innengewinde aufweist, dass mit einem Außengewinde am Gehäuseabschnitt zusammenwirkt. Somit ist eine Wechsel zwischen den beiden Funktionsstellungen mit einer einfachen Drehbewegung möglich.

Um in Rastposition ein leichtes Ein- und Ausbewegen des Rastmittels in beziehungsweise aus den Rastausnehmungen zu ermöglichen ist es zweckmäßig, wenn das Rastmittel eine Kugel ist oder im Beaufschlagungsbereich für die Rastausnehmungen kugelartig ausgebildet ist.

Nachstehend sind Ausführungsbeispiele erfindungsgemäßer Stativköpfe anhand der Zeichnungen näher erläutert.

Es zeigt:
- Fig. 1: eine seitliche Schnittdarstellung eines Stativkopfs,
- Fig. 2: eine Schnittdarstellung des Stellarms mit Gehäusefortsatz, Gewindehülse und Handhabe des Stativkopfs aus Figur 1,
- Fig. 3: eine Aufsicht des Stativkopfs gemäß Figur 1 mit demgegenüber um 90° verschwenkter Gelenkkugel,
- Fig. 4: eine Schnittdarstellung ähnlich Figur 1, jedoch mit demgegenüber um 90° versetzt am Lagergehäuse angebrachtem Gehäusefortsatz,
- Fig. 5: eine Schnittdarstellung ähnlich Figur 1, jedoch mit einem Rastmittel zum Eingreifen in Rastausnehmungen des unteren Lagerteils,
- Fig. 6: eine Schnittdarstellung ähnlich Figur 5, jedoch mit demgegenüber um 90° versetzt am Lagergehäuse angebrachtem Gehäusefortsatz und
- Fig. 7: eine Aufsicht des Stativkopfs gemäß Figur 5 mit demgegenüber um 90° verschwenkter Gelenkkugel.

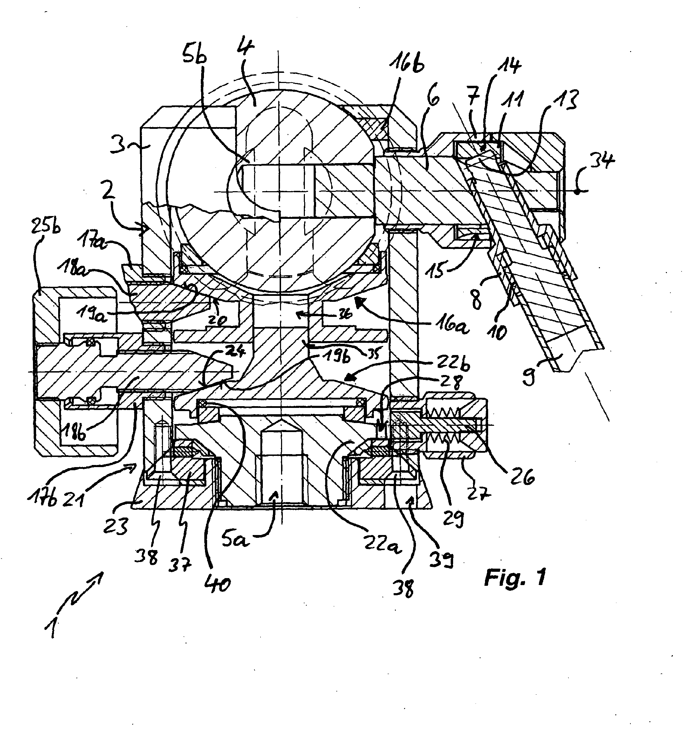

Ein im ganzen mit 1 bezeichneter Stativkopf weist gemäß Figur 1 ein Kugelgelenk 2 mit einer in einem Lagergehäuse 3 gelagerten Gelenkkugel 4 auf. Am unteren Ende des Stativkopfs 1 befindet sich eine Anschlussstelle 5a in Form einer Gewindebohrung zum Befestigen des Stativkopfs 1 an einem nicht dargestellten Stativ oder dergleichen Halterung. Am oberen Ende des Stativkopfes 1, an der Gelenkkugel 4, ist eine weitere Anschlussstelle 5b für ein ebenfalls nicht dargestelltes optisches Gerät, beispielsweise eine Kamera, ein Fernglas oder ein Spektiv, vorgesehen, wobei sich in Figur 1 die Gelenkkugel 4 in einer Schwenkposition befindet, in der die obere Anschlussstelle 5b aus der Zeichenebene hinaus in Richtung des Betrachters geneigt ist.

Zum Verschwenken der Gelenkkugel 4 in einer vertikalen Ebene ist diese drehfest mit einem aus dem Lagergehäuse 3 führenden Stellarm 6 verbunden, der in einem mit dem Lagergehäuse 3 verbundenen Gehäusefortsatz 7 drehbar gelagert ist und der eine winklig vorstehende Gewindehülse 8 aufweist. In dieser Gewindehülse 8 ist eine Handhabe 9 gelagert, die ein entsprechendes Gegengewinde 10 aufweist und dadurch einerseits drehbar und andererseits, durch die Drehung im Gewinde der Gewindehülse 8 axial verstellbar ist.

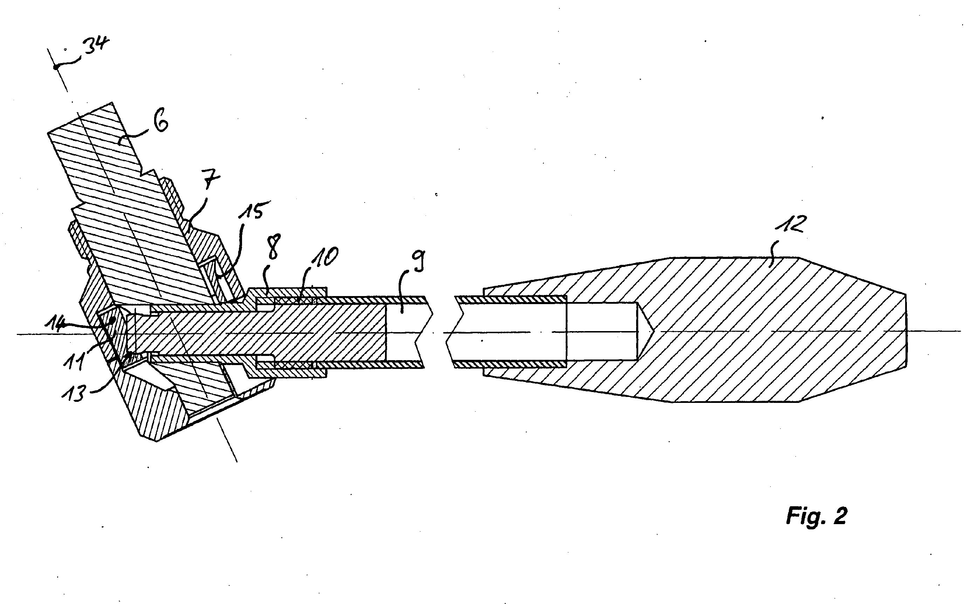

Wie insbesondere in der Detaildarstellung gemäß Figur 2 erkennbar ist, ist ein zwischen dem Gehäusefortsatz 7 und dem Stellarm 6 umlaufender Feststellring 11 vorgesehen. Der Feststellring 11 weist eine in den Figuren nicht näher erkennbare, halbkreisförmige Ausnehmung auf, durch welche die Gewindehülse 8 mit der Handhabe 9 verläuft und wodurch eine drehfeste Verbindung zwischen Gewindehülse 8 und Handhabe 9 einerseits und Feststellring 11 andererseits gebildet ist.
Beim Verschwenken der Handhabe 9 an deren Griffende 12 werden daher die Gewindehülse 8, der damit verbundene Stellarm 6 sowie die mit dem Stellarm 6 verbundene Gelenkkugel 4 mitbewegt. Ebenso wird der Feststellring 11 in dem Gehäusefortsatz 7 gedreht.

Der Feststellring 11 ist im Bereich des Beaufschlagungsendes 13 der Handhabe 9 offen ausgebildet, wobei die einander zugewandten Ringinnenseiten 14 im Öffnungsbereich schräg ausgebildet sind und eine konische, sich zum radialen Außenbereich des Feststellrings 11 verjüngende Aufnahmeöffnung für das Beaufschlagungsende 13 der Handhabe 9 bilden. Beim Eindrehen der Handhabe 9 in die Gewindehülse 8 schiebt sich das Beaufschlagungsende 13 der Handhabe 9 tiefer in den sich verjüngenden Öffnungsbereich hinein, wodurch der Feststellring 11 aufgeweitet oder gespreizt wird. Dabei legt sich der Feststellring 11 reibschlüssig an die Innenwandung des Gehäusefortsatzes 7 an, so dass ein Verschwenken der Handhabe 9 und somit der Gelenkkugel 4 aufgrund der erhöhten Reibungskräfte nicht mehr möglich und die Gelenkkugel 4 in ihrer jeweiligen Position festgelegt ist. Da die feststellenden Beaufschlagungskräfte nicht direkt auf die Gelenkkugel 4 wirken, ist vermieden, dass die Gelenkkugel 4 beim Feststellen in dem Lagergehäuse 3 angehoben, abgesenkt oder verschoben wird, so dass sich das eingestellte Blickfeld eines mit dem Stativkopf 1 verbundenen Fernglases oder dergleichen optischen Gerätes durch den Feststellvorgang nicht verändert. Dies ist insbesondere bei Verwendung von Optiken mit hoher Brennweite wichtig, da bereits Positionsänderungen der Optik im Millimeterbereich deren Blickfeld um mehrere Meter verschieben kann. Durch eine einfache Drehbewegung an der Handhabe 9 kann der Feststellring 11 wieder freigegeben werden, um durch ein Verschwenken der Gelenkkugel 4 ein neues Ziel anzuvisieren. Das Schwenken sowie das Lösen und Festlegen der Gelenkkugel 4 kann dabei vorteilhaft mit einer einzigen Hand am Griffende 12 der Handhabe 9 durchgeführt werden.

Um ein einfaches Aufspreizen des Feststellrings 11 mit geringem Kraftaufwand zu ermöglichen, weist dieser an seinem dem Öffnungsbereich gegenüberliegenden Bereich eine Materialschwächung 15 auf. Dadurch weist der Feststellring 11 in diesem Bereich eine höhere Elastizität auf und die beiden von dieser Materialschwächung 15 ausgehenden Ringabschnitte können einfacher auseinandergespreizt werden.

Für ein sicheres und gleichmäßiges Gleiten des Beaufschlagungsendes 13 der Handhabe 9 an den Ringinnenseiten 14 des Feststellrings 14 weist das Beaufschlagungsendes 13 der Handhabe 9 eine gewölbte Seitenfläche auf. Dadurch ist auch ein sicheres gleiten des Beaufschlagungsendes 13 der Handhabe 9 an den Ringinnenseiten 14 nicht nur bei der axialen, sondern auch bei der Drehbewegung der Handhabe 9 sichergestellt.

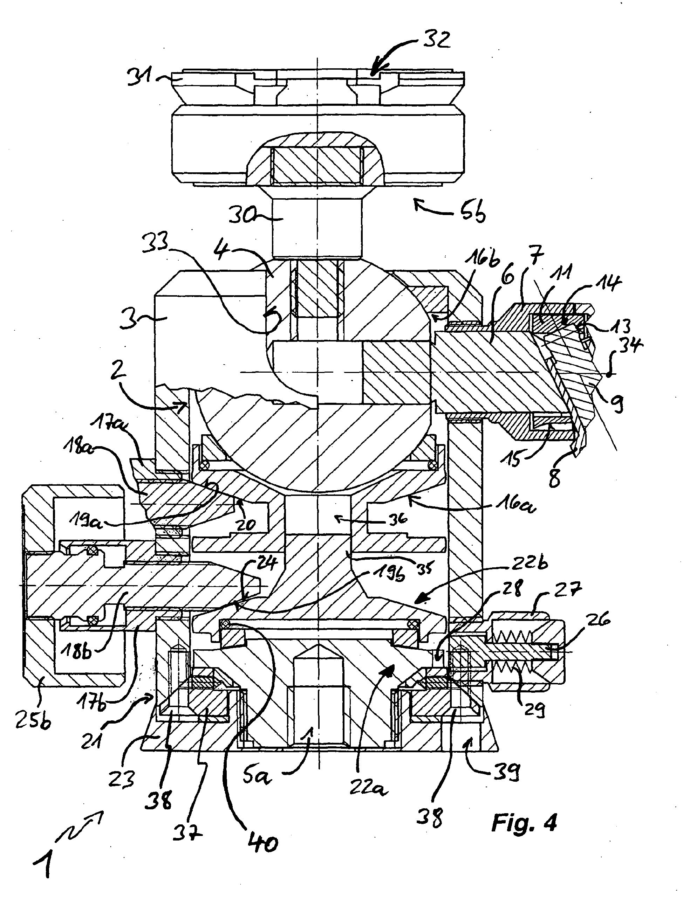

Wie insbesondere bei dem Stativkopf 1 gemäß Figur 4 gut zu erkennen ist, ist die Gelenkkugel 4 in dem Lagergehäuse 3 zwischen zwei Gleitlagern 16a, 16b gelagert. Das untere Gleitlager 16a ist dabei axial verschiebbar in dem Lagergehäuse 3 gelagert. Um dieses Gleitlager 16a von außen axial verstellen zu können, ist in einer Gewindeführung 17a des Lagergehäuses 3 ein als Stellschraube ausgebildetes Beaufschlagungselement 18a vorgesehen, das an seinem innen liegenden Beaufschlagungsende 19a konisch ausgebildet ist und mit einer Auflaufschräge 20 des Gleitlagers 16a zusammenwirkt. Beim Eindrehen des Beaufschlagungselementes 18a wird das Gleitlager 16a daher angehoben und fester an die Gelenkkugel 4 angedrückt, so dass sich der Gleitwiderstand und die erforderliche Kraft zum Verschwenken der Gelenkkugel 4 erhöht. Umgekehrt lässt sich durch Herausdrehen des Beaufschlagungselementes 18a und dem Absenken des Gleitlagers 16a der Gleitwiderstand herabsetzen, um ein Verschwenken der Gelenkkugel 4 mit reduziertem Kraftaufwand zu ermöglichen. Durch Verstellen des Beaufschlagungselementes 18a kann somit wahlweise ein schnelles Verschwenken der Gelenkkugel 4 mit geringem Gleit- und Reibungswiderstand ermöglicht werden, beispielsweise um schnell ein neues Objekt anvisieren zu können, oder bei erhöhtem Widerstand ein weiches und ruckfreies Schwenken und dadurch auch besonders feines Einstellen der Schwenkposition ermöglicht werden.

Da die Gelenkkugel 4 aufgrund des seitlich aus dem Lagergehäuse 3 geführten Stellarms 6 selbst nur in einer vertikalen Ebene verschwenkbar ist, ist zur Durchführung von Schwenkbewegungen in einer horizontalen Ebene im unteren Bereich des Stativkopfs 1 ein Drehlager 21 vorgesehen, das durch das Lagergehäuse 3 einerseits und ein daran drehbar gelagertes Gehäuse-Bodenteil 23 andererseits gebildet ist. Zum drehbaren Verbinden des Lagergehäuses 3 mit dem Gehäuse-Bodenteil 23 weist letzteres ein drehbares Ringelement 37 auf, das mit Schrauben 38 an dem Lagergehäuse 3 festgelegt ist. Über eine Zugangsöffnung 39 im Gehäuse-Bodenteil sind die Schrauben 38 für die Montage des Stativkopfs 1 zugänglich, wobei durch Verdrehen des Gehäuse-Bodenteils 23 jeweils eine der Schrauben 38 in den Bereich der Zugangsöffnung 39 gebracht werden kann.

Zum Variieren der zum Verstellen des Drehlagers 21 erforderlichen Kraft ist ein Reiblager für ein das Lagergehäuse 3 radial durchsetzendes, axial verstellbares Beaufschlagungselement 18b vorgesehen, welches Reiblager ein unteres Lagerteil 22a und ein vertikal dazu, gegen eine Rückstellkraft verstellbares oberes Lagerteil 22b aufweist, wobei das obere Lagerteil 22b eine umlaufende Auflaufschräge 24 für das Beaufschlagungselement 18b aufweist.

Beim horizontalen Verschwenken des Stativköpfs 1 wird das Lagergehäuse 3 und mit diesem das Beaufschlagungselement 18b gedreht, während das obere Lagerelement 22b drehfest in seiner Position verbleibt, so dass das Beaufschlagungsende 19b des Beaufschlagungselements 18b an der Auflaufschräge 24 entlang gleitet.

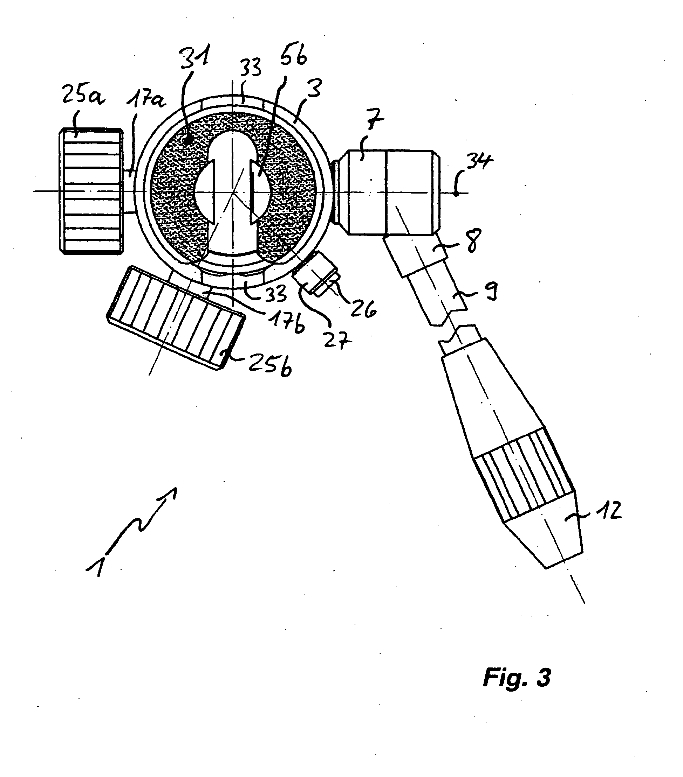

Durch Eindrehen des Beaufschlagungselementes 18b wird durch das Zusammenwirken seines konischen Beaufschlagungsendes 19b mit der Auflaufschräge 24 des oberen Lagerteils 22b des Reiblagers das Lagerteil 22b gegen die Rückstellkraft des elastischen, beispielsweise aus Gummi oder gummiartigem Material bestehenden Ringes 40 nach unten verschoben und die Reibkräfte zwischen der Auflaufschräge 24 und dem Beaufschlagungsende 19b verstärkt, so dass zum horizontalen Verschwenken des Stativkopfs 1 eine größere Kraft erforderlich ist und in der Folge weichere und präzisere Schwenkbewegungen durchgeführt werden können. Gegebenfalls kann das Beaufschlagungselement 18b so weit eingedreht werden, dass durch die hohen Reibkräfte zwischen dem Beaufschlagungselement 18b und der Auflaufschräge 24 des oberen Lagerteils 22b das Drehlager 21 praktisch blockiert ist und sich unter normalem Kraftaufwand nicht mehr verstellen lässt. Im Gegenzug kann durch ein entsprechendes Herausdrehen des Beaufschlagungselementes 18b die Haft- und Gleitreibung zwischen dem Beaufschlagungselement 18b und der Auflaufschräge 24 des oberen Lagerteils 22b für schnelle Schwenkbewegungen reduziert werden. Für ein einfaches Betätigen des Beaufschlagungselementes 18b weist dieses an seinem außen liegenden Betätigungsende einen im Radius vergrößerten Drehknopf 25b auf. Ein entsprechender Drehknopf 25a ist auch für das Beaufschlagungselement 18a zum Verstellen des Gleitlagers 16a für die Gelenkkugel 4 vorgesehen (Figur 3).

In den Figuren 1 und 4 ist weiterhin ein Rastelement 26 erkennbar, mit dem das Drehlager 21 blockiert werden kann. Das Rastelement 26 ist dazu durch einen Gehäuseabschnitt 27 in den Innenraum des Lagergehäuses 3 geführt. In der in den Figuren dargestellten, zurückgezogenen Freigabeposition des Rastelementes 26 ist das Drehlager 21 frei drehbar. Durch Verschieben des Rastelementes 26 in den Innenraum des Lagergehäuses 3 greift das Rastelement 26 in eine in Drehrichtung begrenzte Rastausnehmung 28 des unteren Lagerteils 22a ein, so dass in dieser Rastposition ein Verdrehen des Drehlagers 21 nicht möglich ist. Für ein selbsttätiges Rückstellen des Rastelementes 26 in die zurückgezogene Freigabeposition ist in dem Gehäuseabschnitt 27 eine mit dem Rastelement 26 zusammenwirkende Rückstellfeder 29 vorgesehen. Durch ein Blockieren des Drehlagers 21, was verständlicherweise nur in bestimmten Drehpositionen, in denen die Rastausnehmung 28 im Eingriffsbereich des Rastelementes 26 angeordnet ist, möglich ist, kann der Stativkopf 1 vereinfacht auf ein Stativ aufgeschraubt werden.

Das obere Lagerteil 22b weist einen axialen Abschnitt 35 auf, der formschlüssig in eine Ausnehmung 36 des unteren Gleitlagers 16a der Gelenkkugel 4 eingreift. Dadurch bilden diese beiden Elemente 16a, 22b gegenseitig das axiale Lager für deren Axialverschiebung, wodurch eine mechanisch einfache und kostengünstige Konstruktion ohne zusätzliche Axiallagerteile möglich ist.

In Figur 4 ist auch die obere Anschlussstelle 5b für das optische Gerät deutlich zu erkennen. Über einen Achsabschnitt 30 ist ein Befestigungsteller 31 mit einer Klemmaufnahme 32 für einen nicht dargestellten Befestigungsschuh des zu befestigenden optischen Gerätes an der Gelenkkugel 4 gehalten. Um das Einschwenken des Achsabschnittes 30 beim Schwenken der Gelenkkugel 4 zu ermöglichen, weist das Lagergehäuse 3 in seinem oberen Endbereich zwei gegenüberliegende, U-förmige Ausnehmungen 33 auf.

Figur 3 zeigt eine Aufsicht auf den Stativkopf 1 gemäß Figur 1, aus der die Anordnung der Handhabe 9, der Drehknöpfe 25a, 25b für die Beaufschlagungselemente 18a, 18b sowie des Rastelementes 26 an dem Lagergehäuse 3 hervorgeht. Die einzelnen Elemente sind so angeordnet, dass sie leicht zu bedienen sind und der Stativkopf 1 an der Handhabe 9 mit einer Hand geführt und bedarfsweise mit der anderen Hand die Drehknöpfe 25a, 25b betätigt werden können.

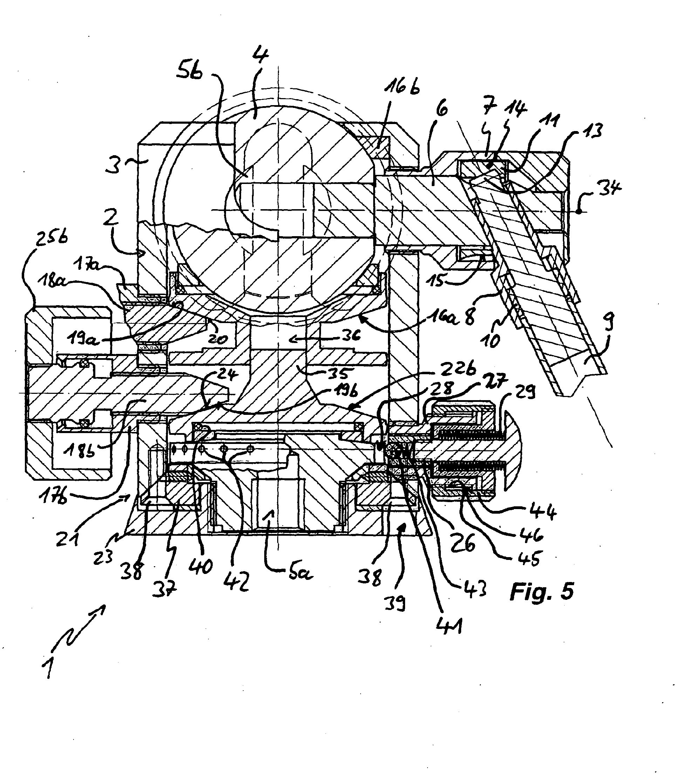

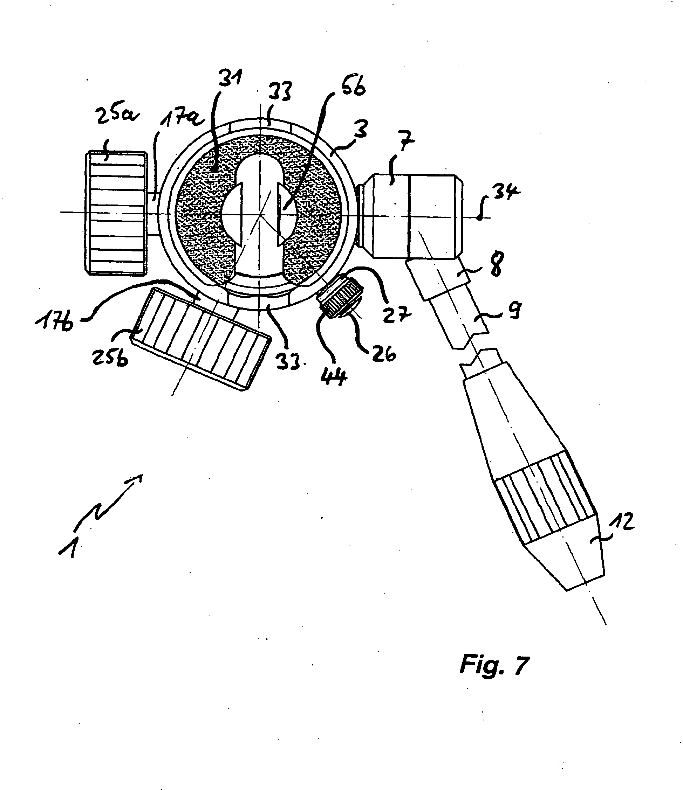

Die Figuren 5 bis 7 zeigen jeweils einen Stativkopf entsprechend den Figuren 1, 3 und 4, wobei jedoch jeweils in dem dem unteren Lagerteil 22a zugewandten Endbereich des Rastelementes 26 ein gegen eine Rückstellkraft einer Rückstellfeder 43 verstellbares Rastmittel 41 zum wechselweise Eingreifen in umfangsseitig an dem unteren Lagerteil 22a angeordnete Rastausnehmungen 42 vorgesehen ist.

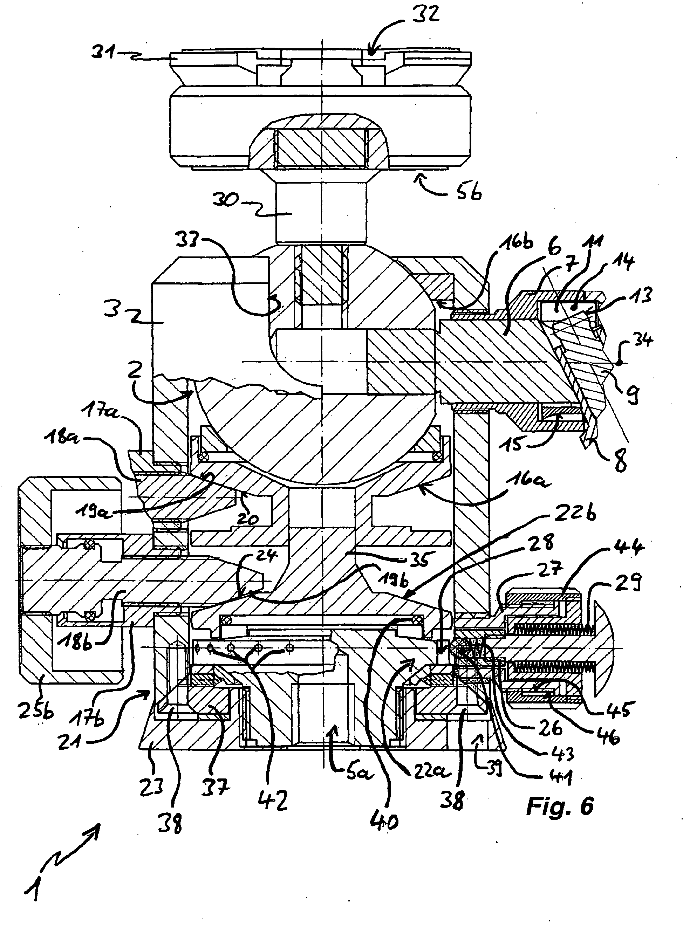

In der in den Figuren 5 und 6 dargestellten Rastposition greift das als Kugel ausgebildete Rastmittel 41 in eine der Rastausnehmungen 42 ein und das Drehlager 21 ist somit in der jeweiligen, exakt definierten Drehposition festgelegt. Mit Hilfe des Rastmittels 41 und der Rastausnehmungen 42 kann das Drehlager 21 um exakt definierte Winkelstellungen verstellt werden, bis das Rastmittel 41 in einer weiteren der Rastausnehmungen 42 eingreift, was beispielsweise für Panoramafotografien benötigt wird, bei denen mehrere Aufnahmen nacheinander getätigt werden und die exakt zueinander passende, seitliche Anschlusslinien erforderlich machen.

Um auch ein freies Drehen des Drehlagers 21 zu ermöglichen, beispielsweise um ein sich bewegendes Objekt zu verfolgen, ist das Rastelement 26 mit dem Rastmittel 41 in einem Halteteil 44 gelagert, welches zwischen einer in den Figuren 5 bis 7 dargestellten Rastposition und einer demgegenüber nach außen zurückgezogenen Freilaufposition verstellbar ist. Das Halteteil 44 weist hierzu ein Innengewinde 45 auf, das mit einem Außengewinde 46 an dem Gehäuseabschnitt 27 zusammenwirkt. Durch Drehen des Halteteils 44 kann das Rastmittel 41 somit auf einfache Art zwischen der Rastposition und der Freilaufposition verstellt werden.

Analog den Figuren 1, 3 und 4 kann das als Druckknopf ausgebildete Rastelement 26 durch eine Axialverschiebung gegen die Rückstellkraft der Rückstellfeder 29 in eine Rastausnehmung 28 des Lagerteils 22a eingeführt werden, um beim Aufschrauben des Stativkopfs 1 auf ein Stativ ein Drehen des Drehlagers 21 zu vermeiden.

## Patentansprüche

1. Stativkopf (1) mit einem Kugelgelenk (2), das eine in einem Lagergehäuse (3) verschwenkbar gelagerte Gelenkkugel (4) aufweist, wobei das Kugelgelenk (2) zwischen an einander abgewandten Enden des Stativkopfs (1) befindlichen Anschlussstellen (5a, 5b) angeordnet ist, von denen die eine mit einer Kamera, einem Fernglas, einem Spektiv oder dergleichen optischem Gerät und die andere mit wenigstens einem Stativbein oder dergleichen Halterung verbunden oder verbindbar ist, **dadurch gekennzeichnet, dass** die Gelenkkugel (4) drehfest mit einem aus dem Lagergehäuse (3) nach außen führenden Stellarm (6) verbunden ist, der' zumindest bereichsweise in einem mit dem Lagergehäuse (3) verbundenem Gehäusefortsatz (7) drehbar gelagert ist und welcher Stellarm (6) eine winklig vorstehende Gewindehülse (8) für eine drehbar und axial verstellbar in der Gewindehülse (8) gehaltene, ein Gegerigewinde (10) aufweisende Handhabe (9) aufweist, und dass ein zwischen dem Stellarm (6) und dem Gehäusefortsatz (7) umlaufend gelagerter, mit dem in die Gewindehülse (8) ragenden Endbereich der Handhabe (9) beaufschlagbarer und **dadurch** spreizbarer und reibschlüssig an die Innenwandung des Gehäusefortsatzes (7) anlegbarer Feststellring (11) vorgesehen ist, der bezüglich der Drehachse (34) des Stellarms (6) drehfest mit der Gewindehülse (8) verbunden ist.

2. Stativkopf nach Anspruch 1, **dadurch gekennzeichnet, dass** der Feststellring (11) im Beaufschlagungsbereich für die Handhabe (9) offen ausgebildet ist, und dass die einander zugewandten Ringinnenseiten (14) im Öffnungsbereich schräg angeordnet sind und eine konische, sich zum radialen Außenbereich verjüngende Aufnahmeöffnung für das Beaufschlagungsende (13) der Handhabe (9) bilden.

3. Stativkopf nach Anspruch 1 oder 2, **dadurch gekennzeichnet, dass** das Beaufschlagungsende (13) der Handhabe (9) kugelförmig oder kugelabschnittsförmig ausgebildet ist und/oder eine gewölbte Seitenfläche aufweist.

4. Stativkopf nach einem der Ansprüche 1 bis 3, **dadurch gekennzeichnet, dass** der Feststellring (11) im dem Öffnungsbereich gegenüberliegenden Bereich eine Materialschwächung (15) aufweist.

5. Stativkopf nach einem der Ansprüche 1 bis 4, **dadurch gekennzeichnet, dass** der Feststellring (11) im Bereich der Materialschwächung (15) eine kreisabschnittsförmige Ausnehmung für die winklig vorstehende Gewindehülse (8) aufweist, die von der Gewindehülse (8) formschlüssig durchsetzt ist.

6. Stativkopf nach einem der Ansprüche 1 bis 5, **dadurch gekennzeichnet, dass** die Gelenkkugel (4) zwischen zwei Gleitlagern (16a, 16b) in dem Lagergehäuse (3) gelagert ist, wobei eines der Gleitlager (16a) in Beabstandungsrichtung der Gleitlager (16a, 16b) axial verschiebbar in dem Lagergehäuse (3) gelagert ist und eine Auflaufschräge (20) für ein das Lagergehäuse (3) durchsetzendes, quer zur Verschieberichtung des Gleitlagers (16a) axial verstellbares Beaufschlagungselement (18a) aufweist.

7. Stativkopf nach einem der Ansprüche 1 bis 6, **dadurch gekennzeichnet, dass** das Beaufschlagungselement (18a) als Stellschraube ausgebildet ist und in einer Gewindeführung (17a) des Lagergehäuses (3) drehbar gelagert ist.

8. Stativkopf nach einem der Ansprüche 1 bis 7, **dadurch gekennzeichnet, dass** das Beaufschlagungselement (18a) an dem dem Stellarm (6) um etwa 180° gegenüberliegenden Bereich des Lagergehäuses (3) angeordnet ist.

9. Stativkopf nach einem der Ansprüche 1 bis 8, **dadurch gekennzeichnet, dass** der Stativkopf (1) zwischen der Gelenkkugel (4) und der halterungsseitigen Anschlussstelle (5a) ein Drehlager (21) für eine Drehbewegung in einer horizontalen Ebene aufweist, und dass das Drehlager (21) durch das Lagergehäuse (3) einerseits und ein daran drehbar gelagertes Gehäuse-Bodenteil (23) andererseits gebildet ist.

10. Stativkopf nach einem der Ansprüche 1 bis 9, **dadurch gekennzeichnet, dass** zum Variieren der zum Verstellen des Drehlagers (21) erforderlichen Kraft ein Reiblager für ein das Lagergehäuse (3) radial durchsetzendes, axial verstellbares Beaufschlagungselement (18b) vorgesehen ist, welches Reiblager ein unteres Lagerteil (22a) und ein vertikal dazu, gegen eine Rückstellkraft verstellbares oberes Lagerteil (22b) aufweist, wobei das obere Lagerteil (22b) eine umlaufende Auflaufschräge (24) für das Beaufschlagungselement (18b) aufweist.

11. Stativkopf nach Anspruch 10, **dadurch gekennzeichnet, dass** das Beaufschlagungselement (18b) als Stellschraube ausgebildet ist und in einer Gewindeführung (17b) des Lagergehäuses (3) drehbar gelagert ist.

12. Stativkopf nach Anspruch 10 oder 11, **dadurch gekennzeichnet, dass** ein axial verstellbares, das Lagergehäuse (3) im Bereich des Drehlagers (21) durchsetzendes Rastelement (26) vorgesehen ist, das zwischen einer in eine Rastausnehmung (28) des unteren Lagerteils (22a) eingreifenden Rastposition und einer demgegenüber zurückgezogenen Freigabeposition verstellbar ist.

13. Stativkopf nach Anspruch 12, **dadurch gekennzeichnet, dass** das Rastelement (26) druckknopfartig ausgebildet ist und gegen die Rückstellkraft einer Rückstellfeder (29), die in einem am Lagergehäuse (3) gehaltenen Gehäuseabschnitt (27) angeordnet ist, in die Rastposition verstellbar ist.

14. Stativkopf nach Anspruch 12 oder 13, **dadurch gekennzeichnet, dass** im dem unteren Lagerteil (22a) zugewandten Endbereich des Rastelementes (26) ein gegen eine Rückstellkraft einer Rückstellfeder (43) verstellbares Rastmittel (41) zum wechselweise Eingreifen in umfangsseitig an dem unteren Lagerteil (22a) angeordnete Rastausnehmungen (42) vorgesehen ist.

15. Stativkopf nach Anspruch 14, **dadurch gekennzeichnet, dass** ein axial verstellbar an dem Gehäuseabschnitt (27) gelagertes Halteteil (44) für das Rastelement (26) mit dem Rastmittel (41) vorgesehen ist, das zwischen einer Rastposition mit in eine der Rastausnehmungen (42) eingreifendem Rastmittel (41) und einer demgegenüber zurückgezogenen Freilaufposition verstellbar ist.

16. Stativkopf nach Anspruch 15, **dadurch gekennzeichnet, dass** das Halteteil (44) für das Rastelement (26) mit dem Rastmittel (41) als Drehknopf ausgebildet ist und ein Innengewinde (45) aufweist, dass mit einem Außengewinde (46) am Gehäuseabschnitt (27) zusammenwirkt.

17. Stativkopf nach einem der Ansprüche 14 bis 16, **dadurch gekennzeichnet, dass** das Rastmittel (41) eine Kugel ist oder im Beaufschlagungsbereich für die Rastausnehmungen (42) kugelartig ausgebildet ist.

18. Stativkopf nach einem der Ansprüche 1 bis 17, **dadurch gekenntzeichnet, dass** die Beaufschlagüngselemente (18a, 18b) jeweils an ihrem Beaufschlagungsende (19a, 19b) konisch ausgebildet sind und eine mit der jeweiligen Auflaufschräge (20, 24) des Gleitlagers (16a) oder des oberen Lagerteils (22b) zusammenwirkende Auflaufschräge aufweisen.

19. Stativkopf nach einem der Ansprüche 1 bis 18, **dadurch gekennzeichnet, dass** die als Stellschrauben ausgebildeten Beaufschlagungselemente (18a, 18b) an ihren außen liegenden Betätigungsenden jeweils einen Drehknopf (25a, 25b) aufweisen.

## Claims

1. Tripod head (1) having a ball-and-socket joint (2) which comprises a ball (4) pivotably mounted in a bearing housing (3), the ball-and-socket joint (2) being arranged between attachment points (5a, 5b) located at ends of the tripod head (1) that are remote from one another, one of said attachment points being connected or connectable to a camera, a telescope, a spotting scope or similar optical instrument and the other attachment point being connected or connectable to a tripod leg or similar holder, **characterised in that** the ball (4) is connected for rotation with a positioning arm (6) leading out from the bearing housing (3), said arm being rotatably mounted at least in part in a housing projection (7) connected to the bearing housing (3) and said arm (6) having an angularly projecting threaded sleeve (8) for a handle (9) with a mating thread (10) which is held in rotatably and axially adjustable manner in the threaded sleeve (8), and **in that** a fixing ring (11) is provided which is mounted circumferentially between the positioning arm (6) and the housing projection (7) and is capable of being acted upon by the end region of the handle (9) protruding into the threaded sleeve (8) and is thereby spreadable and capable of being applied in frictionally locking manner to the inner wall of the housing projection (7), said fixing ring (11) being connected for rotation with the threaded sleeve (8) relative to the rotation axis (34) of the positioning arm (6).

2. Tripod head according to claim 1, **characterised in that** the fixing ring (11) is constructed to be open in the area of impact for the handle (9), and **in that** the inner sides (14) of the ring facing one another are arranged diagonally in the opening region and form a conical accommodating opening for the impact end (13) of the handle (9) that tapers towards the radially outer region.

3. Tripod head according to claim 1 or 2, **characterised in that** the impact end (13) of the handle (9) is in the shape of a sphere or spherical segment and/or has a convex lateral surface.

4. Tripod head according to one of claims 1 to 3, **characterised in that** the fixing ring (11) has a weakened area of material (15) in the end opposite the opening region.

5. Tripod head according to one of claims 1 to 4, **characterised in that** the fixing ring (11) comprises, in the region of the weakened area (15), a recess in the form of a segment of a circle for the angularly protruding threaded sleeve (8) through which the threaded sleeve (8) passes in interlocking engagement.

6. Tripod head according to one of claims 1 to 5, **characterised in that** the ball (4) is mounted between two floating bearings (16a, 16b) in the bearing housing (3), wherein one of the floating bearings (16a) is mounted in the bearing housing (3) so as to be axially movable in the direction of spacing of the floating bearings (16a, 16b) and has an approach gradient (20) for an impact element (18a) passing through the bearing housing (3), which is axially movable transversely with respect to the direction of movement of the floating bearing (16a) .

7. Tripod head according to one of claims 1 to 6, **characterised in that** the impact element (18a) is in the form of an adjusting screw and is rotatably mounted in a threaded guide (17a) of the bearing housing (3).

8. Tripod head according to one of claims 1 to 7, **characterised in that** the impact element (18a) is arranged on the region of the bearing housing (3) located opposite the positioning arm (6) at about 180°.

9. Tripod head according to one of claims 1 to 8, **characterised in that** the tripod head (1) comprises, between the ball (4) and the attachment point (5a) at the holder end, a rotary bearing (21) for a rotary movement in a horizontal plane, and **in that** the rotary bearing (21) is formed by the bearing housing (3), on the one hand, and a housing base portion (23) rotatable mounted thereon, on the other hand.

10. Tripod head according to one of claims 1 to 9, **characterised in that** in order to vary the force required to move the rotary bearing (21), a friction bearing is provided for an axially adjustable impact element (18b) passing radially through the bearing housing (3), said friction bearing comprising a lower bearing part (22a) and an upper bearing part (22b) which is adjustable vertically thereto, counter to a restoring force, the upper bearing part (22b) having a circumferential approach gradient (24) for the impact element (18b).

11. Tripod head according to claim 10, **characterised in that** the impact element (18b) is constructed as an adjusting screw and is rotatably mounted in a threaded guide (17b) of the bearing housing (3).

12. Tripod head according to claim 10 or 11, **characterised in that** an axially adjustable latching element (26) is provided, which passes through the bearing housing (3) in the region of the rotary bearing (21), and which is adjustable between a latching position engaging in a latching recess (28) of the lower bearing part (22a) and a release position which is retracted relative thereto.

13. Tripod head according to claim 12, **characterised in that** the latching element (26) is in the form of a push button and can be moved into the latching position counter to the restoring force of a restoring spring (29) which is arranged in a housing portion (27) secured on the bearing housing (3).

14. Tripod head according to claim 12 or 13, **characterised in that** in the end portion of the latching element (26) facing the lower bearing part (22a) is provided a latching member (41) that is adjustable counter to a restoring force of a restoring spring (43), for engaging alternately in latching recesses (42) provided around the circumference of the lower bearing part (22a).

15. Tripod head according to claim 14, **characterised in that** a retaining part (44) for the latching element (26) with the latching member (41) is provided, said part (44) being mounted in axially movable manner on the housing portion (27), and being movable between a latching position in which the latching member (41) engages in one of the latching recesses (42) and an idling position in which it is retracted relative thereto.

16. Tripod head according to claim 15, **characterised in that** the retaining part (44) for the latching element (26) with the latching member (41) is in the form of a rotary knob and has an internal thread (45) which cooperates with an external thread (46) on the housing portion (27).

17. Tripod head according to one of claims 14 to 16, **characterised in that** the latching member (41) is a ball or is ball-shaped in the area of impact for the latching recesses (42).

18. Tripod head according to one of claims 1 to 17, **characterised in that** the impact elements (18a, 18b) are each of conical construction at their impact end (19a, 19b) and have an approach gradient that cooperates with the respective approach gradient (20, 24) of the floating bearing (16a) or of the upper bearing part (22b).

19. Tripod head according to one of claims 1 to 18, **characterised in that** the impact elements (18a, 18b) in the form of adjusting screws each have a rotary knob (25a, 25b) on their outer actuating ends.

## Revendications

1. Tête de trépied (1) munie d'une articulation sphérique (2) comportant une rotule d'articulation (4) montée à pivotement dans un boîtier de montage (3), ladite articulation sphérique (2) étant interposée entre des zones de rattachement (5a, 5b) situées à des extrémités de ladite tête de trépied (1) qui sont tournées à l'opposé l'une de l'autre, zones dont l'une est ou peut être reliée à une caméra, à des jumelles, à un appareil d'études spectrales ou à un appareil optique similaire, et l'autre est ou peut être reliée à au moins un jambage de trépied ou à un support analogue, **caractérisée par le fait que** la rotule d'articulation (4) est verrouillée en rotation avec un bras de réglage (6) s'étendant vers l'extérieur à partir du boîtier de montage (3) et monté rotatif, au moins par zones, dans un appendice (7) relié audit boîtier de montage (3), ledit bras de réglage (6) présentant une douille taraudée (8) faisant saillie angulairement et destinée à une poignée (9) qui est retenue dans ladite douille taraudée (8), avec faculté de rotation et d'ajustement axial, et est pourvue d'un filetage complémentaire (10) ; et par la présence d'une bague d'arrêt (11) qui est montée de manière à ceinturer le bras de réglage (6) et l'appendice (7) du boîtier, peut être sollicitée, et donc déployée par la région extrême de la poignée (9) s'engageant dans la douille taraudée (8), peut être appliquée par frottement contre la paroi intérieure dudit appendice (7) du boîtier et est reliée à ladite douille taraudée (8), avec verrouillage rotatif vis-à-vis de l'axe de rotation (34) dudit bras de réglage (6).

2. Tête de trépied selon la revendication 1, **caractérisée par le fait que** la bague d'arrêt (11) est de réalisation ouverte dans la zone de sollicitation dédiée à la poignée (9) ; et **par le fait que** les faces internes (14) de ladite bague, tournées l'une vers l'autre, sont disposées à l'oblique dans la région de l'ouverture et forment un orifice tronconique de réception de l'extrémité de sollicitation (13) de ladite poignée (9), muni d'un rétrécissement vis-à-vis de la région extérieure radiale.

3. Tête de trépied selon la revendication 1 ou 2, **caractérisée par le fait que** l'extrémité de sollicitation (13) de la poignée (9) est de réalisation sphérique ou en forme de segment sphérique, et/ou offre une surface latérale bombée.

4. Tête de trépied selon l'une des revendications 1 à 3, **caractérisée par le fait que** la bague d'arrêt (11) présente un resserrement ou affaiblissement de matière (15) dans la région faisant face à la région de l'ouverture.

5. Tête de trépied selon l'une des revendications 1 à 4, **caractérisée par le fait que** la bague d'arrêt (11) comporte, dans la région du resserrement de matière (15), un évidement en forme de secteur circulaire qui est dévolu à la douille taraudée (8) faisant saillie angulairement, et que ladite douille taraudée (8) traverse par concordance de formes.

6. Tête de trépied selon l'une des revendications 1 à 5, **caractérisée par le fait que** la rotule d'articulation (4) est montée dans le boîtier de montage (3) entre deux paliers de glissement (16a, 16b), l'un (16a) desdits paliers de glissement étant logé dans ledit boîtier de montage (3) avec faculté de coulissement axial dans la direction de l'espacement desdits paliers de glissement (16a, 16b), et étant doté d'un biseau ascendant (20) dédié à un élément de sollicitation (18a) qui traverse ledit boîtier de montage (3) et est mobile, dans le sens axial, transversalement par rapport à la direction de coulissement dudit palier de glissement (16a).

7. Tête de trépied selon l'une des revendications 1 à 6, **caractérisée par le fait que** l'élément de sollicitation (18a) est réalisé sous la forme d'une vis de réglage et est monté, à rotation, dans un guide taraudé (17a) du boîtier de montage (3).

8. Tête de trépied selon l'une des revendications 1 à 7, **caractérisée par le fait que** l'élément de sollicitation (18a) est disposé dans la région du boîtier de montage (3) qui est située à environ 180° en vis-à-vis du bras de réglage (6).

9. Tête de trépied selon l'une des revendications 1 à 8, **caractérisée par le fait que** ladite tête de trépied (1) comporte, entre la rotule d'articulation (4) et la zone de rattachement (5a) située du côté du support, un palier de rotation (21) affecté à un mouvement rotatoire dans un plan horizontal ; et **par le fait que** ledit palier de rotation (21) est formé, d'une part, par le boîtier de montage (3) et, d'autre part, par une partie de fond (23) montée à rotation sur ledit boîtier.

10. Tête de trépied selon l'une des revendications 1 à 9, **caractérisée par** la présence, en vue de faire varier la force nécessaire à la mise en mouvement du palier de rotation (21), d'un palier de frottement assigné à un élément de sollicitation (18b) réglable axialement et traversant radialement le boîtier de montage (3), lequel palier de frottement englobe une partie inférieure (22a) et une partie supérieure (22b) mobile verticalement par rapport à la partie précitée, en opposition à une force de rappel, ladite partie supérieure (22b) dudit palier comportant un biseau périphérique ascendant (24) destiné audit élément de sollicitation (18b).

11. Tête de trépied selon la revendication 10, **caractérisée par le fait que** l'élément de sollicitation (18b) est réalisé sous la forme d'une vis de réglage et est monté, à rotation, dans un guide taraudé (17b) du boîtier de montage (3).

12. Tête de trépied selon la revendication 10 ou 11, **caractérisée par** la présence d'un élément encliquetable (26) qui est réglable axialement, traverse le boîtier de montage (3) dans la région du palier de rotation (21) et est mobile entre une position crantée, pénétrant dans un évidement de crantage (28) de la partie de palier inférieure (22a), et une position de libération rétractée vis-à-vis de la position précitée.

13. Tête de trépied selon la revendication 12, **caractérisée par le fait que** l'élément encliquetable (26) est réalisé à la manière d'un bouton-poussoir et peut être amené à la position crantée en opposition à la force de rappel d'un ressort de rappel (29), logé dans un compartiment ou portion de boîtier (27) retenu sur le boîtier de montage (3).

14. Tête de trépied selon la revendication 12 ou 13, **caractérisée par** la présence, dans la région extrême de l'élément encliquetable (26) tournée vers la partie de palier inférieure (22a), d'un moyen d'encliquetage (41) mobile en opposition à une force de rappel d'un ressort de rappel (43) et réalisé pour pénétrer, alternativement, dans des évidements de crantage (42) situés sur le pourtour de ladite partie de palier inférieure (22a).

15. Tête de trépied selon la revendication 14, **caractérisée par** la présence d'une pièce de retenue (44) qui est montée sur le compartiment (27) avec mobilité axiale, est destinée à l'élément encliquetable (26) associé au moyen d'encliquetage (41), et peut être déplacée entre une position crantée, dans laquelle ledit moyen d'encliquetage (41) est engagé dans l'un des évidements de crantage (42), et une position de course libre rétractée vis-à-vis de la position précitée.

16. Tête de trépied selon la revendication 15, **caractérisée par le fait que** la pièce de retenue (44), destinée à l'élément encliquetable (26) associé au moyen d'encliquetage (41), est réalisée sous la forme d'un bouton tournant et présente un filetage intérieur (45) coopérant avec un filetage extérieur (46) situé sur le compartiment (27).

17. Tête de trépied selon l'une des revendications 14 à 16, **caractérisée par le fait que** le moyen d'encliquetage (41) est une bille, ou bien est réalisé à la manière d'une bille dans la zone de sollicitation affectée aux évidements de crantage (42).

18. Tête de trépied selon l'une des revendications 1 à 17, **caractérisée par le fait que** les éléments de sollicitation (18a, 18b) sont respectivement de réalisation tronconique à leur extrémité de sollicitation (19a, 19b), et présentent un biseau ascendant coopérant avec le biseau ascendant respectif (20, 24) du palier de glissement (16a), ou de la partie de palier supérieure (22b).

19. Tête de trépied selon l'une des revendications 1 à 18, **caractérisée par le fait que** les éléments de sollicitation (18a, 18b), réalisés sous la forme de vis de réglage, sont respectivement munis d'un bouton tournant (25a, 25b) à leurs extrémités d'actionnement situées à l'extérieur.
